# EUROPÄISCHE PATENTSCHRIFT

(11) **EP 1 775 244 B1**
(45) Veröffentlichungstag und Bekanntmachung des Hinweises auf die Patenterteilung: **02.09.2009**
(21) Anmeldenummer: 06021106.7
(22) Anmeldetag: 07.10.2006
(51) Int. Cl.: B65G 53/46

(54) **Gehäuse für eine Zellenrad-Schleuse**
Housing for a cellular wheel sluice
Corps pour écluse a roue cellulaire

(30) Priorität: 12.10.2005 DE 102005048734
(43) Veröffentlichungstag der Anmeldung: 18.04.2007
(73) Patentinhaber: Coperion GmbH, 70469 Stuttgart (DE); CeramTec-Etec GmbH, 53797 Lohmar (DE)
(72) Erfinder: Piccolini, Michael, 53721 Siegburg-Kaldauen (DE); Zinser, Bruno, 88289 Waldburg (DE); Reich, Lorenz, 88250 Weingarten (DE)
(74) Vertreter: Rau, Manfred

(56) Entgegenhaltungen:
- DE-A1- 4 411 811

## Beschreibung

Die Erfindung betrifft ein Gehäuse für eine Zellenrad-Schleuse nach dem Oberbegriff des Anspruches 1.

Aus der DE 44 11 811 A1 ist ein derartiges Gehäuse bekannt, bei dem die Auskleidungs-Elemente durch ebene Plättchen gebildet sind, die eine polygone Innenwand-Oberfläche ausbilden. Im Übergangsbereich der Innenwand des Innenraums zum Einlass-Trichter bzw. Auslass-Trichter sind Kanten-Schutz-Leisten vorgesehen. Bedingt durch diese Ausgestaltung sind beim Umlauf des im Gehäuse anzuordnenden Zellenrades die Abstände zwischen den außenliegenden Längskanten der Flügel des Zellenrades und der Innenwand des Gehäuses pulsierend. Es treten also pulsierende Belastungen am Gehäuse und am Zellenrad auf. Des Weiteren ist die Zahl der Spalte zwischen den Plättchen außerordentlich groß, was die Gefahr von Ausbrüchen oder Auswaschungen vergrößert. Derartige Plättchen haben in der Praxis Maße von 20 x 10 x 5 mm und 15 x 15 x 5 mm.

Der Erfindung liegt daher die Aufgabe zugrunde, ein Gehäuse für eine Zellenrad-Schleuse der gattungsgemäßen Art so auszugestalten, dass der Aufwand bei der Auskleidung des Gehäuses verringert und die Betriebssicherheit und die Lebensdauer des Gehäuses erhöht werden.

Diese Aufgabe wird bei einem Gehäuse der gattungsgemäßen Art erfindungsgemäß durch die Merkmale im Kennzeichnungsteil des Anspruches 1 gelöst. Bei kleineren Gehäuses erstreckt sich eine Verschleiß-Schutz-Leiste über die volle Länge des Innenraums des Gehäuses. Bei größeren Gehäusen werden zwei Verschleiß-Schutz-Leisten benötigt. Nur bei sehr großen Gehäusen kann der Einsatz von drei in Längsrichtung des Gehäuses hintereinander angeordneten Verschleiß-Schutz-Leisten notwendig sein. Die Verschleiß-Schutz-Leisten liegen in allen Richtungen praktisch fugenlos aneinander und bilden eine exakt kreiszylindrische Innenwand. Dadurch, dass die Leisten verhältnismäßig großflächig sind, ist die Zahl der pro Gehäuse zu verlegenden bzw. anzubringenden Verschleiß-Schutz-Leisten verhältnismäßig gering. Der Verlegeaufwand ist daher ebenfalls gering. Durch die fugenlose bzw. nahezu fugenlose Ausbildung der gesamten Auskleidung und die kreiszylindrische Ausgestaltung der Innenwand sind Verschleißprobleme minimiert. Dadurch, dass die der Gehäusewand zugewandten Flächen der Verschweiß-Schutz-Leisten eben ausgebildet sind, wird zur zylindrischen Gehäusewand ein Spalt gebildet, der mit Klebstoff gefüllt ist, wodurch eine besonders einfache Befestigung der Verschleiß-Schutz-Leisten an der Gehäusewand möglich ist.

Durch die Weiterbildung nach Anspruch 2 wird ein radiales Ausrichten der Leisten unnötig, da sie durch das Anliegen ihrer Längskanten an der kreiszylindrischen Gehäusewand des Gehäuses bereits in eine exakte Lage gebracht werden.

Die weiteren Unteransprüche enthalten vorteilhafte Weiterbildungen und Ausgestaltungen der Erfindung.

Weitere Vorteile, Merkmale und Einzelheiten der Erfindung ergeben sich aus der nachfolgenden Beschreibung von Ausführungsbeispielen anhand der Zeichnungen sie zeigen.
- Fig. 1: eine vertikale Längs-Ansicht einer Zellenrad-Schleuse in teilweise aufgebrochener Darstellung,
- Fig. 2: einen vertikalen Längsschnitt durch das Gehäuse der Zellenrad-Schleuse,
- Fig. 3: einen vertikalen Querschnitt durch die Zellenrad-Schleuse,
- Fig. 4: eine Einzelheit IV aus Fig. 3 in gegenüber Fig. 3 vergrößertem Maßstab,
- Fig. 5: eine abgewandelte Einzelheit aus Fig. 3 und
- Fig. 6: eine der Darstellung in Fig. 5 entsprechende abgewandelte Ausgestaltung.

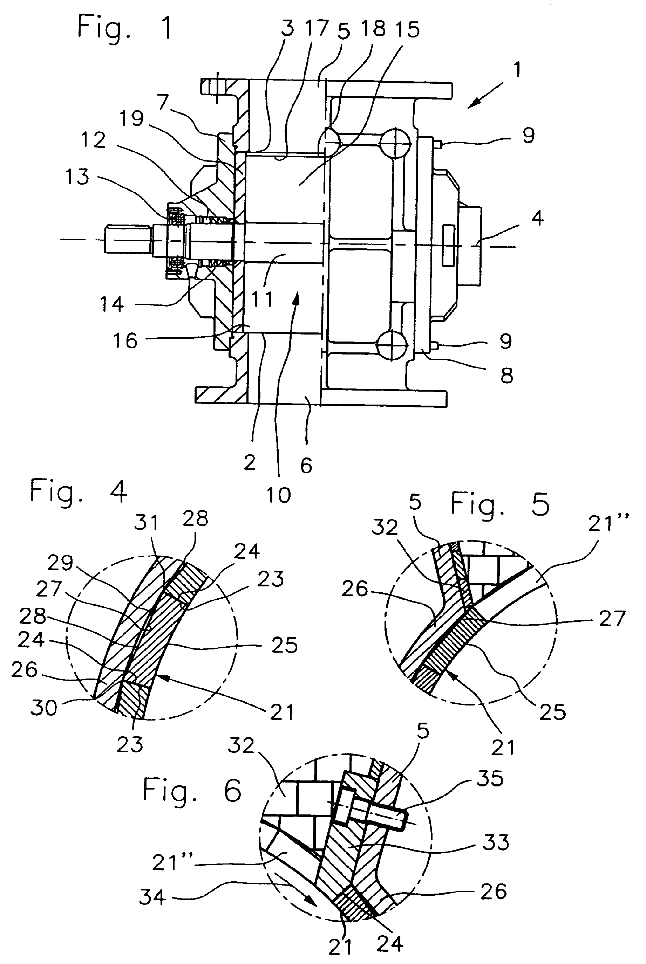

Die in Fig. 1 dargestellte Zellenrad-Schleuse weist ein Gehäuse 1 mit einem im Wesentlichen zylindrischen Innenraum 2 auf, der durch eine entsprechende zylindrische Innenwand 3 begrenzt wird. Der Innenraum 2 weist eine horizontale Mittel-Achse 4 auf. In den Innenraum 2 mündet von oben ein Einlass-Stutzen 5 ein und unten ein Auslass-Stutzen 6 aus. Der Innenraum 2 des Gehäuses 1 ist an seinen Stirnseiten offen ausgebildet. Diese Stirnseiten werden durch Deckel 7, 8 abgedeckt, die mittels nur angedeuteter Schrauben 9 am Gehäuse 1 befestigt sind.

Im Innenraum 2 ist konzentrisch zur Mittel-Achse 4 ein Zellenrad 10 angeordnet, dessen Welle 11 in den Deckeln 7, 8 ausgebildete Lageröffnungen 12 durchsetzt und in an den Deckeln 7, 8 angebrachten Lagern 13 drehbar gelagert ist. In den Lageröffnungen 12 sind weiterhin Dichtungen 14 angeordnet, die die Abdichtung der Lageröffnungen 12 nach außen bewirken.

An der Welle 11 sind radial zur Mittel-Achse 4 von ihr abstehende, durch rechteckige Platten gebildete Flügel 15 angebracht. Diese Flügel 15 sind in üblicher Weise in gleichen Winkelabständen über den Umfang der Welle 11 an dieser angebracht. Jeweils benachbarte Flügel 15 begrenzen zwischen sich eine Zelle 16. Die Flügel 15 lassen jeweils zwischen ihrer radial außen liegenden Längskante 17 und der Innenwand 3 des Gehäuses 1 nur einen kleinen konstruktionsbedingten Längsspalt 18 frei. Die Zellen 16 sind zu den Deckeln 7, 8 hin geschlossen ausgebildet, d. h., an der Welle 11 sind sich radial zur Mittel-Achse 4 erstreckende, benachbarte Flügel 15 verbindende Seitenscheiben 19 angeordnet.

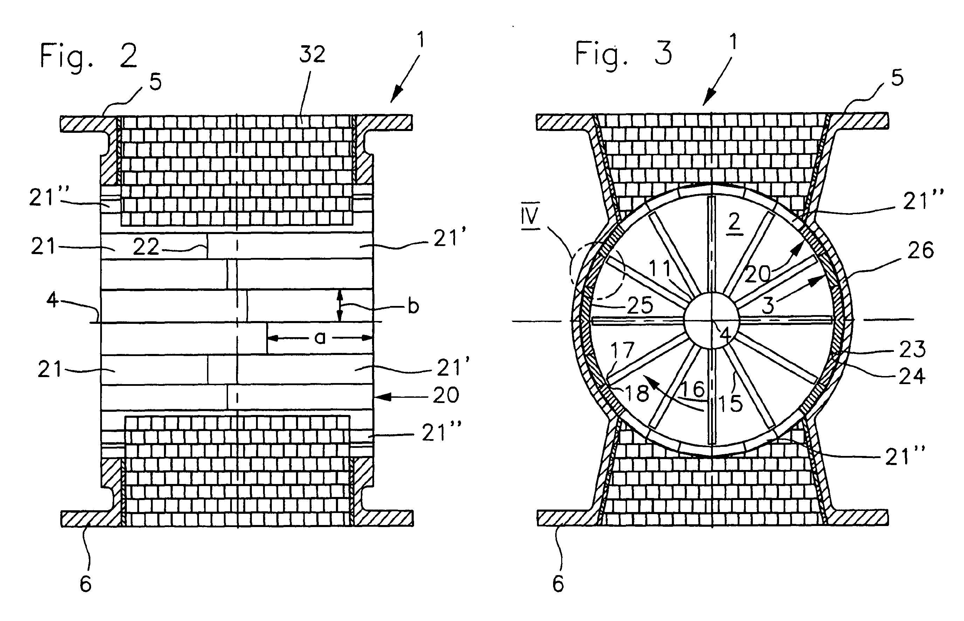

Wie den Fig. 2 bis 5 entnehmbar ist, ist das Gehäuse 1 mit einer Verschleiß-Schutz-Auskleidung 20 versehen. Soweit es um die zylindrische Innenwand 3 geht, besteht die Auskleidung 20 aus Verschleiß-Schutz-Leisten 21, 21', wobei über die Länge des Innenraums 2 jeweils zwei derartige Leisten 21, 21' parallel zur Achse 4 vorgesehen sind. Bei kleineren Gehäusen 1 kann auch nur eine solche Leiste 21 vorgesehen sein, die sich dann über die volle Länge des Gehäuses 1 erstreckt. Bei sehr großen Gehäusen 1 können auch mehr als zwei, beispielsweise drei Leisten 21 vorgesehen sein. Auf jeden Fall ist die Länge a der Leisten 21, 21' in Richtung der Achse 4 erheblich größer als deren Breite b in Umfangsrichtung der Innenwand 3. Es gilt: a > 3b und bevorzugt a > 5b. Die Anzahl der Verschleiß-Schutz-Leisten 21, 21' ist im Verhältnis zur Größe des Gehäuses 1 auf ein Minimum zu reduzieren. Für die Länge a der Leisten 21, 21' in Richtung der Achse 4 gilt: a ≥ 200 mm und bevorzugt a ≥ 400 mm. Diese Längenangaben gelten naturgemäß nur insoweit, als die Länge des Gehäuses überhaupt dieses Maß erreicht. Für die Breite b der Leisten 21, 21' in Umfangsrichtung der Innenwand 3 gilt: b ≥ 20 mm und bevorzugt b ≥ 40 mm.

Wie weiterhin Fig. 2 entnehmbar ist, sind in Umfangsrichtung der Innenwand 3 des Gehäuses 1 gesehen die Stoßstellen 22 zweier in Richtung der Achse 4, also in Längsrichtung des Gehäuses 1, hintereinander angeordneter Leisten 21, 21' gegeneinander versetzt angeordnet. Die in Längsrichtung hintereinander angeordneten Leisten 21, 21' liegen an ihren Stoßstellen 22 jeweils flächig, also nahezu fugenlos aneinander. An diesen Stoßstellen 22 ist eine extrem dünne, zeichnerisch nicht darstellbare Klebstoffschicht von beispielsweise 0,1 mm Dicke vorgesehen.

Wie aus Fig. 3 und 4 hervorgeht, liegen in Umfangsrichtung benachbarte Leisten 21, 21' mit ihren sich radial zur Achse 4 erstreckenden Längs-Seitenflächen 23, 24 bündig, also flächig aneinander, sodass auch hier keine Fugen gebildet sind.

Die dem Innenraum 2 zugewandten Flächen sind als Teil-Zylinder-Flächen 25 ausgebildet, die jeweils Teil eines Kreis-Zylinders um die Mittel-Achse 4 sind. Die insgesamt durch die Verschleiß-Schutz-Leisten 21, 21' gebildete Verschleiß-Schutz-Auskleidung 20 ist also kreiszylindrisch, allerdings mit Ausnehmungen im Bereich der Stutzen 5, 6.

Die der Gehäusewand 26 zugewandten Flächen 27 der einzelnen Leisten 21, 21' sind eben ausgebildet. Sie dienen als Befestigungsflächen. Die zwischen diesen ebenen Flächen 27 und der kreiszylindrischen Gehäusewand 26 ausgebildeten Spalte 28 sind mit Klebstoff 29 gefüllt, mittels dessen die jeweiligen Leisten 21, 21' an der Gehäusewand 26 befestigt sind. Die parallel zueinander und parallel zur Mittel-Achse 4 verlaufenden, jeweils zwischen der Fläche 27 und den Längs-Seitenflächen 23, 24 gebildeten Längskanten 30, 31 jeder Leiste 21, 21' liegen an der zylindrischen Gehäusewand 26 des Gehäuses 1 an, wodurch die Leisten 21, 21' selber exakt zur Gehäusewand 26 und zur Achse 4 ausgerichtet werden. Die in ihrer Summe die Innenwand 3 bildenden Teil-Zylinder-Flächen 25 gehen also völlig exakt und bündig ineinander über.

Das Gehäuse 1 besteht aus Grauguss oder Edelstahlguss. Sehr große Gehäuse 1 können auch in Schweißkonstruktion ausgeführt sein. Die Gehäusewand 26 ist konzentrisch zur Achse 4 ausgedreht. Die Verschleiß-Schutz-Leisten 21, 21' bestehen aus hochverschleißfestem Keramikmaterial und sind durch Schleifen in exakt die geschilderte Form gebracht. Wie sich aus der Zeichnung ergibt, erstrecken sich die Leisten 21, 21' über den nicht von den Stutzen 5, 6 unterbrochenen Teil des Gehäuses 1. In den den Deckeln 7, 8 benachbarten kleinen Bereichen der Gehäusewand 26 sind Kurz-Leisten 21 " angeordnet, für die die vorstehende Beschreibung mit der Maßgabe gilt, dass sie nur sehr kurz bezogen auf die Länge des Gehäuses 1 ausgebildet sind, da sie im Bereich des Einlass-Stutzens 5 bzw. des Auslass-Stutzens 6 angeordnet sind.

Der Einlass-Stutzen 5 und der Auslass-Stutzen 6 sind mit verhältnismäßig kleinen kachelartigen Platten 32 aus gleichem oder gleichartigem hochverschleißfestem Keramikmaterial ausgekleidet.

Wie Fig. 5 entnehmbar ist, ist es zweckmäßig, die dem Einlass-Stutzen 5 bzw. dem Auslass-Stutzen 6 jeweils benachbarten Leisten 21 bzw. 21' so weit in den Stutzen 5 bzw. 6 vorstehen zu lassen, dass die kleinen Platten 32 bei der Auskleidung des Einlass-Stutzens 5 bzw. des Auslass-Stutzens 6 auf die rückwärtige Fläche 27 der Leiste 21 bzw. 21' aufgesetzt werden können.

Wie aus Fig. 6 hervorgeht, können im Einlass-Stutzen 5 und gegebenenfalls auch im Auslass-Stutzen 6 Kanten-Schutz-Leisten 33 vorgesehen sein, die - bezogen auch die Drehrichtung 34 des Zellenrades 10 - die zugewandte Längs-Seitenfläche 24 der am Stutzen 5 bzw. 6 liegenden Verschleiß-Schutz-Leiste 21 bzw. 21' abdecken. Eine solche Kanten-Schutz-Leiste 33 ist mittels Schrauben 35 im jeweiligen Stutzen 5 befestigt. Dies kommt insbesondere dann in Betracht, wenn das zu fördernde Material große Partikel oder besonders harte Fremdstoffe beinhaltet. Derartige Kanten-Schutz-Leisten 33 kommen daher insbesondere auf der in Fig. 6 dargestellten Seite des Einlass-Stutzens 5 in Betracht, gegen die das Zellenrad 10 gedreht wird.

## Patentansprüche

1. Gehäuse für eine Zellenrad-Schleuse
- mit einer Gehäusewand (26),
- mit einem Innenraum (2) mit einer Mittel-Längs-Achse (4),
- mit einem Einlass (5),
- mit einem Auslass (6) und
- mit einer Verschleiß-Schutz-Auskleidung (20) des Innenraums (2), die
-- aus einzelnen an der Gehäusewand (26) angebrachten Auskleidungs-Elementen aus hochverschleißfestem Werkstoff gebildet ist, und
-- eine den Innenraum (2) begrenzende Innenwand (3) bilden,
**dadurch gekennzeichnet,**
**dass** die Auskleidungs-Elemente durch sich in Längsrichtung des Gehäuses (1) erstreckende Verschleiß-Schutz-Leisten (21, 21') gebildet sind, wobei für das Verhältnis der Länge a der Verschleiß-Schutz-Leisten (21, 21') in Längsrichtung des Gehäuses (1) im Verhältnis zu ihrer Breite b in Umfangsrichtung der Innenwand (3) gilt: a ≥ 3b, **dass** die der Gehäusewand (26) zugewandten Flächen (27) der Verschleiß-Schutz-Leisten (21, 21') eben ausgebildet sind und jeweils zur Gehäusewand (26) einen Spalt (28) begrenzen, der mit Klebstoff (29) gefüllt ist,
**dass** die Verschleiß-Schutz-Leisten (21, 21') mit ihren LängsSeitenflächen (23, 24) nahezu fugenlos aneinander liegen und
**dass** die dem Innenraum (2) zugewandten Flächen der Verschleiß-Schutz-Leisten (21, 21') als Teil-Zylinder-Flächen (25) ausgebildet sind, die sich zur kreiszylindrisch ausgebildeten Innenwand (3) ergänzen.

2. Gehäuse nach Anspruch 1, **dadurch gekennzeichnet, dass** die der kreiszylindrisch ausgebildeten Gehäusewand (26) zugewandten Längskanten (30, 31) der Verschleiß-Schutz-Leisten (21, 21') an der Gehäusewand (26) anliegen.

3. Gehäuse nach Anspruch 1 oder 2, **dadurch gekennzeichnet, dass** in Längsrichtung des Gehäuses (1) mindestens zwei Verschleiß-Schutz-Leisten (21, 21') hintereinander angeordnet sind, die an ihren Stoßstellen (22) nahezu fugenlos flächig aneinander liegen.

4. Gehäuse nach einem der Ansprüche 1 bis 3**, dadurch gekennzeichnet, dass** für das Verhältnis der Länge a der Verschleiß-Schutz-Leisten (21, 21') in Längsrichtung des Gehäuses (1) im Verhältnis zu ihrer Breite b in Umfangsrichtung der Innenwand (3) gilt: a ≥ 5b.

5. Gehäuse nach einem der Ansprüche 1 bis 4, **dadurch gekennzeichnet, dass** für die Länge a der Verschleiß-Schutz-Leisten (21, 21') in Längsrichtung des Gehäuses (1) gilt: a ≥ 200 mm und bevorzugt a ≥ 400 mm.

6. Gehäuse nach einem der Ansprüche 1 bis 5, **dadurch gekennzeichnet, dass** für die Breite b der Verschleiß-Schutz-Leisten (21, 21') in Umfangsrichtung der Innenwand (3) gilt: b ≥ 20 mm und bevorzugt b ≥ 40mm.

7. Gehäuse nach einem der Ansprüche 1 bis 6, **dadurch gekennzeichnet, dass** in Umfangsrichtung des Gehäuses (1) einander benachbarte Stoßstellen (22) zwischen in Längsrichtung des Gehäuses (1) hintereinander angeordneten Verschleiß-Schutz-Leisten (21, 21') in Längsrichtung des Gehäuses (1) gegeneinander versetzt angeordnet sind.

8. Gehäuse nach einem der Ansprüche 1 bis 7, **dadurch gekennzeichnet, dass** der Einlass (5) und/oder der Auslass (6) mit einer Verschleiß-Schutz-Auskleidung versehen sind, und
**dass** benachbarte Verschleiß-Schutz-Leisten (21, 21') derart in den Einlass (5) und/oder den Auslass (6) vorstehen, dass die Auskleidung auf der der Gehäusewand (26) zugewandten Fläche (27) der Verschleiß-Schutz-Leisten (21,21') aufsetzt.

## Claims

1. Housing for a cellular wheel sluice, the housing comprising
- a housing wall (26),
- an inner space (2) with a central longitudinal axis (4);
- an inlet (5);
- an outlet (6); and
- an anti-wear lining (20) of the inner space (2), which anti-wear lining (20)
-- is formed of individual lining elements of highly wear-resistant material which are attached to the housing wall (26); and
-- forms an inner wall (3) defining the inner space (2),
**characterized in**
**that** the lining elements are formed by anti-wear strips (21, 21') extending in a longitudinal direction of the housing (1), wherein to the relationship of the length a of the anti-wear strips (21, 21') in the longitudinal direction of the housing (1) relative to their width b in the peripheral direction of the inner wall (3) applies a ≥ 3b;
**that** the surfaces (27) of the anti-wear strips (21, 21') facing the housing wall (26) are plane and define in each case a gap (28) towards the housing wall (26), the gap (28) being filled with adhesive (29);
**that** the longitudinal side surfaces (23, 24) of the anti-wear strips (21, 21') abut each other in a virtually seamless manner; and
**that** the surfaces of the anti-wear strips (21, 21') facing the inner space (2) are partial cylinder surfaces (25) which combine to form the circular cylindrical inner wall (3).

2. Housing according to claim 1, **characterized in**
**that** the longitudinal edges (30, 31) of the anti-wear strips (21, 21') facing the circular cylindrical housing wall (26) abut the housing wall (26).

3. Housing according to claim 1 or 2, **characterized in**
**that** at least two anti-wear strips (21, 21') are arranged one behind the other in the longitudinal direction of the housing (1), said anti-wear strips (21, 21') being in a virtually seamless surface-to-surface contact with each other at their joints (22).

4. Housing according to one of claims 1 to 3, **characterized in**
**that** to the relationship of the length a of the anti-wear strips (21, 21') in the longitudinal direction of the housing (1) relative to their width b in the peripheral direction of the inner wall (3) applies a ≥ 5b.

5. Housing according to one of claims 1 to 4, **characterized in**
**that** to the length a of the anti-wear strips (21, 21') in the longitudinal direction of the housing (1) applies a ≥ 200 mm and preferably a ≥ 400 mm.

6. Housing according to one of claims 1 to 5, **characterized in**
**that** to the width b of the anti-wear strips (21, 21') in the peripheral direction of the inner wall (3) applies b ≥ 20 mm and preferably b ≥ 40 mm.

7. Housing according to one of claims 1 to 6, **characterized in**
**that** joints (22) which are adjacent to each other in the peripheral direction of the housing (1) are staggered relative to each other in the longitudinal direction of the housing (1) between anti-wear strips (21, 21') arranged one behind the other in the longitudinal direction of the housing (1).

8. Housing according to one of claims 1 to 7, **characterized in**
**that** the inlet (5) and/or the outlet (6) are provided with an anti-wear lining; and
**that** adjacent anti-wear strips (21, 21') project into the inlet (5) and/or the outlet (6) in such a way that the lining is supported on the surface (27) of the anti-wear strips (21, 21') facing the housing wall (26).

## Revendications

1. Corps pour une écluse à roue cellulaire
- avec une paroi de corps (26),
- avec un espace intérieur (2) avec un axe longitudinal médian (4),
- avec une entrée (5),
- avec une sortie (6) et
- avec un revêtement de protection contre l'usure (20) de l'espace intérieur (2), qui
- - est formé d'éléments de revêtement séparés, montés sur la paroi de corps (26), en matériau très résistant à l'usure, et
- - forment une paroi intérieure (3) délimitant un espace intérieur (2),
**caractérisé**
**en ce que** les éléments de revêtement sont formés par des baguettes de protection contre l'usure (21, 21') s'étendant dans le sens longitudinal du corps (1), sachant que pour le rapport de la longueur a des baguettes de protection contre l'usure (21, 21') dans le sens longitudinal du corps (1) à leur largeur b dans le sens périphérique de la paroi intérieure (3), on a : a ≥ 3b,
**en ce que** les surfaces (27) des baguettes de protection contre l'usure (21, 21') tournées vers la paroi de corps (26) sont réalisées de manière plane et délimitent respectivement vers la paroi de corps (26), une fente (28) qui est remplie de colle (29),
**en ce que** les baguettes de protection contre l'usure (21, 21') sont côte à côte presque sans joints avec leurs faces latérales longitudinales (23, 24), et
**en ce que** les surfaces des baguettes de protection contre l'usure (21, 21') tournées vers l'espace intérieur (2) sont réalisées sous forme de surfaces cylindriques partielles (25), qui se complètent pour former la paroi intérieure (3) réalisée de manière cylindrique circulaire.

2. Corps selon la revendication 1, **caractérisé**
**en ce que** les arêtes longitudinales (30, 31) des baguettes de protection contre l'usure (21, 21') tournées vers la paroi de corps (26) réalisée de manière cylindrique circulaire s'appuient contre la paroi de corps (26).

3. Corps selon la revendication 1 ou 2, **caractérisé**
**en ce qu'**au moins deux baguettes de protection contre l'usure (21, 21'), qui sont côte à côte en nappe presque sans joints au niveau de leurs zones de contact (22), sont agencées l'une derrière l'autre dans le sens longitudinal du corps (1).

4. Corps selon l'une quelconque des revendications 1 à 3, **caractérisé**
**en ce que** pour le rapport de la longueur a des baguettes de protection contre l'usure (21, 21') dans le sens longitudinal du corps (1) à leur largeur b dans le sens périphérique de la paroi intérieure (3), on a : a ≥ 5b.

5. Corps selon l'une quelconque des revendications 1 à 4, **caractérisé**
**en ce que** pour la longueur a des baguettes de protection contre l'usure (21, 21') dans le sens longitudinal du corps (1), on a : a ≥ 200 mm et de préférence a ≥ 400 mm.

6. Corps selon l'une quelconque des revendications 1 à 5, **caractérisé**
**en ce que** pour la largeur b des baguettes de protection contre l'usure (21, 21') dans le sens périphérique de la paroi intérieure (3), on a : b ≥ 20 mm et de préférence b ≥ 40 mm.

7. Corps selon l'une quelconque des revendications 1 à 6, **caractérisé**
**en ce que** des zones de contact (22) adjacentes les unes aux autres dans le sens périphérique du corps (1) entre des baguettes de protection contre l'usure (21, 21') agencées les unes derrière les autres dans le sens longitudinal du corps (1) sont disposées en décalage mutuel dans le sens longitudinal du corps (1).

8. Corps selon l'une quelconque des revendications 1 à 7, **caractérisé**
**en ce que** l'entrée (5) et/ou la sortie (6) sont dotées d'un revêtement de protection contre l'usure, et
**en ce que** des baguettes de protection contre l'usure (21, 21') adjacentes sont en saillie dans l'entrée (5) et/ou dans la sortie (6) de telle sorte que le revêtement s'appuie sur la surface (27) des baguettes de protection contre l'usure (21, 21'), laquelle surface est tournée vers la paroi de corps (26).
